# EUROPEAN PATENT APPLICATION

(11) **EP 4 723 258 A1**
(43) Date of publication of application: **08.04.2026**
(21) Application number: 23941954.2
(22) Date of filing: 21.06.2023
(51) Int. Cl.: H01M 10/04

(54) **BATTERY SUPPORTING MECHANISM AND BATTERY HEATING DEVICE**

(71) Applicant: Contemporary Amperex Technology Co., Limited, Ningde, Fujian 352100 (CN)
(72) Inventor: WANG, Jifeng, Ningde, Fujian 352100 (CN); BAI, Guoxi, Ningde, Fujian 352100 (CN)
(74) Representative: Kraus & Lederer PartGmbB
(86) International application number: PCT/CN2023/101874
(87) International publication number: WO 2024/259665

(57) **Abstract**

The present application is applicable to the technical field of battery manufacturing apparatuses and provides a battery support mechanism (30) and a battery heating device (1). The battery support mechanism (30) includes a base (100), a drive structure (200), and two end plate support structures (300). The two end plate support structures (300) are spaced apart along a first direction on the base (100), and at least one of the two end plate support structures (300) is in transmission connection to the drive structure (200) to move along the first direction under the drive of the drive structure (200). The battery support mechanism (30) provided by the present application is configured to support a battery (50). A distance between the two end plate support structures (300) can be adjusted through the drive structure (200) according to the size of the battery (50), so as to support batteries (50) of different sizes with higher compatibility.

## Description

### TECHNICAL FIELD

The present application relates to the technical field of battery manufacturing apparatuses, and more specifically, to a battery support mechanism and a battery heating device.

### BACKGROUND

With the increasing emphasis on environmental protection, electric vehicles have rapidly risen in the vehicle industry due to their energy-saving and environmentally friendly advantages. Electric vehicles use batteries as power supply devices. In the battery manufacturing process, side plates need to be fixed to the sides of battery cells using adhesive, and then the side plates are heated to cure the adhesive.

During a process of heating a side plate of a battery, the battery is placed on a support mechanism matched with the battery for a certain degree of positional limitation and support, and then the side plate is heated by a heating mechanism. However, support mechanisms in the related art are only suitable for a single type of battery, resulting in poor compatibility.

### SUMMARY

The purpose of the embodiments of the present application is to provide a battery support mechanism and a battery heating device, which can enhance the compatibility of the battery support mechanism and improve the heating efficiency for batteries of various sizes.

To achieve the above purpose, the technical solution adopted by the present application is as follows:
In a first aspect, a battery support mechanism is provided, including: a base, a drive structure, and two end plate support structures, where the two end plate support structures are spaced apart along a first direction on the base, and at least one of the two end plate support structures is in transmission connection to the drive structure to move along the first direction under the drive of the drive structure.

In the technical solution of the embodiments of the present application, the end plate support structures are used to support the bottom of the end plates of the battery plates, with the two end plate support structures respectively supporting the bottoms of the end plates on two sides of the battery. The drive structure can drive at least one of the two end plate support structures to move, so as to change the distance between the two end plate support structures. With this arrangement, when heating batteries of different sizes, the distance between the two end plate support structures can be changed by the drive structure, enabling the two end plate support structures to support the bottoms of the end plates of batteries of different sizes, thereby improving the compatibility of the battery support mechanism. That is, the battery support mechanism can support batteries of various sizes, eliminating the need to replace the entire heating device or the entire battery support mechanism when batteries of different sizes are continuously heated, thus improving the processing efficiency for batteries of different sizes.

In some embodiments, the battery support mechanism further includes a bottom surface support structure, the bottom surface support structure is mounted on the base, each end plate support structure has a first support surface on a side facing away from the base, the bottom surface support structure has a second support surface on a side facing away from the base, and a distance between the first support surface and the base is greater than a distance between the second support surface and the base.

In the technical solution of the embodiments of the present application, the bottom surface support structure supports the bottom plate of the battery. Due to the height difference between the bottom plate of the battery and the bottom of the end plate of the battery, and the height difference between the first support surface of the end plate support structure and the second support surface of the bottom surface support structure, when the end plate support structures support the end plates of the battery, the bottom surface support structure can support the bottom plate of the battery. That is, the battery support mechanism provides a larger support range and better support effect for the battery.

In some embodiments, the bottom surface support structure is detachably connected to the base.

In the technical solution of the embodiments of the present application, since the bottom surface support structure is detachably connected to the base, the height difference between the first support surface and the second support surface can be adjusted by using bottom surface support structures of different heights, thereby adapting to batteries of different sizes.

In some embodiments, the battery support mechanism further includes a first spacer, the first spacer is located between the bottom surface support structure and the base, and the first spacer and the bottom surface support structure are both detachably connected to the base.

In the technical solution of the embodiments of the present application, the height of the bottom surface support structure can be adjusted by adding or reducing the first spacer, thereby changing the height difference between the first support surface and the second support surface to adapt to batteries of different sizes.

In some embodiments, multiple first spacers are provided, and the multiple first spacers are spaced apart along the first direction on the base.

In the technical solution of the embodiments of the present application, when the bottom surface support structure has a large size in the first direction, the multiple first spacers spaced apart can support different regions of the bottom surface support structure, improving the support stability of the first spacer for a larger bottom surface support structure.

In some embodiments, the end plate support structure includes a support member and a first adapter, and the support member is detachably mounted on a side of the first adapter farther away from the base.

In the technical solution of the embodiments of the present application, the height difference between the first support surface and the second support surface can be adjusted by using support members of different heights, thereby adapting to batteries of different sizes.

In some embodiments, the battery support mechanism further includes a second spacer, the second spacer is located between the support member and the first adapter, and the second spacer, the support member, and the first adapter are detachably connected.

In the technical solution of the embodiments of the present application, the height of the bottom surface support structure can be adjusted by adding or reducing the second spacer, thereby changing the height difference between the first support surface and the second support surface to adapt to batteries of different sizes.

In some embodiments, the battery support mechanism further includes a position sensor, and the position sensor is configured to detect a position of the end plate support structure in the first direction.

In the technical solution of the embodiments of the present application, with this arrangement, the position of the end plate support structure can be detected by the position sensor, facilitating determination of whether the end plate support structure has moved to the correct position.

In some embodiments, the position sensor is electrically connected to the drive structure.

In the technical solution of the embodiments of the present application, the position information detected by the position sensor is transmitted to the drive structure, and the drive structure controls the movement of the end plate support structure based on the position information of the end plate support structure, achieving a high level of intelligence.

In some embodiments, multiple position sensors are provided, the multiple position sensors are spaced apart along the first direction on the base, and a trigger member is provided on the end plate support structure in transmission connection to the drive structure, the trigger member being capable of triggering any one of the position sensors.

In the technical solution of the embodiments of the present application, the movement position of the end plate support structure can be determined based on the position of the triggered position sensor, and the cost of such position sensors is relatively low.

In some embodiments, the position sensor is mounted on a side of the base facing away from the end plate support structure, the base is provided with a first through hole, the trigger member passes through the first through hole, one end of the trigger member is connected to the end plate support structure, the other end is a trigger end, the trigger end and the position sensor are located on a same side of the base, and the trigger member is capable of moving along the first direction relative to the first through hole.

In the technical solution of the embodiments of the present application, the position sensor and the end plate support structure are respectively located on two opposite sides of the base, facilitating layout and installation.

In some embodiments, the battery support mechanism further includes a limiting structure, and in the first direction, the limiting structure is mounted on at least one side of the end plate support structure in transmission connection to the drive structure.

In the technical solution of the embodiments of the present application, disposition of the limiting structure can limit the maximum movement distance of the end plate support structure in at least one direction to some extent.

In some embodiments, two limiting structures are provided, and in the first direction, the limiting structures are respectively provided on two sides of the end plate support structure in transmission connection to the drive structure.

In the technical solution of the embodiments of the present application, the two limiting structures can limit the movement range of the end plate support structure in the first direction.

In some embodiments, the limiting structure includes a first structural member and a second structural member, the first structural member is mounted on the base, the second structural member is located between the first structural member and the end plate support structure, and the second structural member is detachably connected to the first structural member.

In the technical solution of the embodiments of the present application, the maximum movement distance of the end plate support structure in the direction approaching the limiting structure can be changed by using second structural members of different sizes.

In some embodiments, the battery support mechanism further includes a third spacer, the third spacer is located between the first structural member and the second structural member, and the third spacer and the first structural member are both detachably connected to the second structural member.

In the technical solution of the embodiments of the present application, the maximum movement distance of the end plate support structure in the direction approaching the limiting structure can be changed by adding or reducing the third spacer.

In some embodiments, the drive structure includes one drive assembly, and the drive assembly is in transmission connection to one of the end plate support structures to drive the end plate support structure to move along the first direction, so to approach or move away from the other end plate support structure.

In the technical solution of the embodiments of the present application, after changing the model of the battery to be supported, the drive assembly drives one of the end plate support structures to move toward or away from the other end plate support structure, thereby changing the distance between the two end plate support structures. In this movement mode, only one drive assembly needs to be activated, making the adjustment process simple.

In some embodiments, the drive structure includes two drive assemblies, the two drive assemblies are in one-to-one transmission connection to the two end plate support structures, and each drive assembly is capable of driving the corresponding end plate support structure to move along the first direction, so to approach or move away from the other end plate support structure.

In the technical solution of the embodiments of the present application, both end plate support structures can move toward or away from each other, allowing batteries of different sizes to be supported at a relatively more centered position in the battery support mechanism.

In a second aspect, the present application provides a battery heating device including the battery support mechanism described in the above embodiments.

Since the battery heating device includes the above support mechanism, it has at least all the beneficial effects of the above support mechanism, which will not be repeated here.

The above description is only an overview of the technical solution of the present application. To enable a clearer understanding of the technical means of the present application, it can be implemented in accordance with the content of the specification, and to make the above and other purposes, features, and advantages of the present application more apparent and understandable, specific embodiments of the present application are provided below.

### DESCRIPTION OF DRAWINGS

To more clearly illustrate the technical solutions in the embodiments of the present application, the drawings required for use in the description of the embodiments or the prior art are briefly introduced below. Obviously, the drawings described below are only some embodiments of the present application, and those of ordinary skill in the art can obtain other drawings based on these drawings without creative effort.
FIG. 1 is a schematic structural diagram of a battery in the related art;
FIG. 2 is a schematic structural diagram of a battery heating device provided by an embodiment of the present application;
FIG. 3 is a schematic structural diagram of a battery support mechanism provided by an embodiment of the present application from a first perspective;
FIG. 4 is a schematic structural diagram of a battery support mechanism provided by an embodiment of the present application supporting a battery of one model;
FIG. 5 is a schematic structural diagram of a battery support mechanism provided by an embodiment of the present application supporting a battery of another model;
FIG. 6 is a schematic diagram of a disposition position of a first spacer in a battery support mechanism provided by an embodiment of the present application;
FIG. 7 is a schematic structural diagram of a battery support mechanism provided by an embodiment of the present application from a second perspective;
FIG. 8 is a schematic structural diagram of a battery support mechanism provided by an embodiment of the present application from a second perspective after adding a first spacer;
FIG. 9 is an enlarged view of portion A in FIG. 3;
FIG. 10 is a schematic structural diagram of a battery support mechanism provided by an embodiment of the present application from a third perspective;
FIG. 11 is a schematic structural diagram of a trigger member in a battery support mechanism provided by an embodiment of the present application;
FIG. 12 is an enlarged view of portion B in FIG. 3;
FIG. 13 is an enlarged view of portion C in FIG. 6;
FIG. 14 is an enlarged view of portion D in FIG. 6; and
FIG. 15 is an enlarged view of portion E in FIG. 10.

The reference signs in the above drawings are detailed as follows:
1. battery heating device; 10. frame; 20. heating mechanism; 21. avoidance hole; 30. battery support mechanism; 40. pole pressing mechanism; 50. battery; 51. end plate; 52. side plate; 53. battery cell;
100. base; 110. first spacer; 120. second spacer; 130. third spacer; 140. position sensor; 150. first through hole; 160. second through hole; 170. bearing seat; 180. bearing; 190. proximity sensor;
200. drive structure; 210. drive assembly; 211. servo motor; 212. lead screw; 213. first slider; 214. first slide rail; 215. cylinder body; 216. second slider; 217. second slide rail;
300. end plate support structure; 310. support member; 320. first adapter; 321. second adapter; 330. trigger member; 331. trigger portion; 332. main body portion; 340. first support surface;
400. bottom surface support structure; 410. second support surface;
500. limiting structure; 510. first structural member; and 520. second structural member.

### DESCRIPTION OF EMBODIMENTS

The embodiments of the technical solution of the present application will be described in detail below with reference to the accompanying drawings. The following embodiments are only used to more clearly illustrate the technical solution of the present application and thus serve as examples, and cannot be used to limit the protection scope of the present application.

Unless otherwise defined, all technical and scientific terms used herein have the same meaning as commonly understood by those skilled in the technical field of the present application. The terms used herein are only for the purpose of describing specific embodiments and are not intended to limit the present application. The terms "include" and "have" and any variations thereof in the specification, claims, and description of the drawings of the present application are intended to cover non-exclusive inclusion.

Reference to "embodiment" herein means that a particular feature, structure, or characteristic described in connection to the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of the present application, unless otherwise explicitly specified and limited, technical terms such as "mounted," "connected," "connection," and "fixed" should be understood broadly. For example, they may refer to a fixed connection, a detachable connection, or an integral formation. They may refer to a mechanical connection or an electrical connection. They may refer to a direct connection or an indirect connection through an intermediate medium, or the internal communication or interaction between two components. For those of ordinary skill in the art, the specific meanings of the above terms in the embodiments of the present application can be understood based on specific circumstances.

It should be understood that the orientation or positional relationships indicated by terms such as "length," "width," "upper," "lower," "front," "rear," "left," "right," "vertical," "horizontal," "top," "bottom," "inner," "outer," and the like are based on the orientation or positional relationships shown in the drawings, and are only for the convenience of describing the present application and simplifying the description, rather than indicating or implying that the battery support mechanism or component referred to must have a specific orientation, be constructed, and operated in a specific orientation, and thus cannot be construed as limiting the present application.

In addition, the terms "first" and "second" are used for descriptive purposes only and cannot be understood as indicating or implying relative importance or implicitly indicating the number of technical features indicated. Thus, a feature defined with "first" or "second" may explicitly or implicitly include one or more of such features.

In the description of the present application, "multiple" means two or more, unless otherwise explicitly and specifically limited.

With the increasing severity of environmental pollution, people's awareness of environmental protection has gradually strengthened. At present, the rapid rise of the new energy industry has provided broad space for the application and development of lithium-ion batteries. Lithium-ion batteries have characteristics such as high energy density, long cycle life, and good charge-discharge rate performance, and have been widely used. More and more electrical devices, such as mobile phones, laptops, power tools, and electric vehicles, choose lithium-ion batteries as their power source. The lithium-ion batteries used in the above electrical devices are generally referred to as power batteries, hereinafter referred to as batteries.

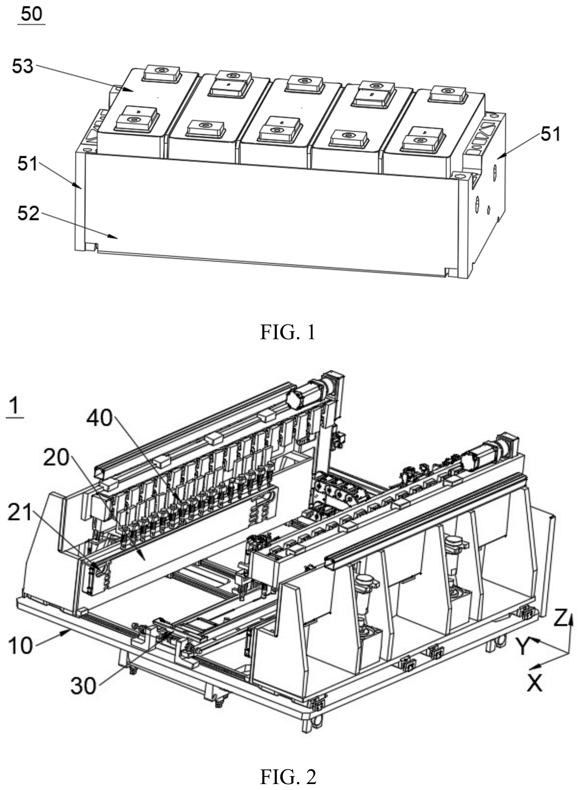

In the manufacturing process of the battery 50, some operations require positional limitation and support for the battery 50. As shown in FIG. 1, the battery 50 being a battery 50 module is used as an example. The battery 50 has a length direction, a width direction, and a height direction that are pairwise perpendicular to each other. The battery 50 includes end plates 51, side plates 52, and battery cells 53. The battery 50 includes the battery cells 53, with the end plates 51 and side plates 52 enclosing an accommodation region, and the battery cells 53 are located within the accommodation region. Two end plates 51 and two side plates 52 are provided, with the two end plates 51 spaced apart along the length direction, and the two side plates 52 spaced apart along the width direction. The accommodation region can accommodate one or more battery cells 53. When there are multiple battery cells 53, the multiple battery cells 53 can be connected in series, in parallel, or in a hybrid connection, where a hybrid connection means that some of the multiple battery cells 53 are connected in series and in parallel. The multiple battery cells 53 can be directly connected in series, in parallel, or in a hybrid connection, and the entirety formed by the multiple battery cells 53 is accommodated in the accommodation region. The battery 50 may also include a bottom plate. When the battery 50 includes a bottom plate, the bottom plate, the end plates 51, and the side plates 52 together enclose the accommodation region, with the battery 50 located on a side in the height direction.

It should be noted that when the battery 50 includes a bottom plate, the bottom surface of the battery 50 is defined as a surface of the bottom plate facing away from the battery cells 53. When the battery 50 does not include a bottom plate, the bottom surface of the battery 50 is defined as one of the two surfaces of the battery cells 53 spaced apart in the height direction of the battery 50.

In some batteries 50, there is a height difference between the bottom surface of the end plate 51 and the bottom surface of the battery 50, that is, a step surface is formed between the end plate 51 and the battery cells 53 or the bottom plate. When the battery 50 is placed on the step surface and the bottom surface of the battery 50 is in contact with the step surface, there is a certain gap between the bottom surface of the end plate 51 and the step surface. When the battery 50 support mechanism supports and limits such a battery 50, the battery 50 support mechanism includes a base and two structural members fixedly mounted on the base and configured to support the bottom surface of the end plate 51. Due to the height difference between the bottom surface of the end plate 51 and the bottom surface of the battery 50, the two structural members are respectively located on two sides of the battery 50 in the length direction, and the two structural members also provide positional limitation in the length direction for the battery 50.

In some cases, a same device is configured to process batteries 50 of different models, and different models of batteries 50 may have different sizes. When the batteries 50 of different models differ in the length direction, the distance between the two end plates 51 varies, making it impossible for these two different models of batteries 50 to be supported by the same battery 50 support mechanism. A battery 50 with a larger distance between the two end plates 51 is referred to as a large-sized battery 50, and a battery 50 with a smaller distance between the two end plates 51 is referred to as a small-sized battery 50. If a battery 50 support structure adapted for supporting a large-sized battery 50 is used to support a small-sized battery 50, the two structural members cannot simultaneously contact the end plates 51 on two sides of the small-sized battery 50, and can at most contact the end plate 51 one side, failing to provide good support or positional limitation. If a battery 50 support structure adapted for supporting a small-sized battery 50 is used to support a large-sized battery 50, the two structural members cannot simultaneously contact the end plates 51 on two sides of the large-sized battery 50. When one structural member supports the end plate 51 on one side, the other structural member is in contact with the bottom plate of the large-sized battery 50, causing the large-sized battery 50 to be supported in a tilted state, which is not conducive to subsequent operations.

It has been found through research that since the same battery 50 support mechanism cannot adapt to batteries 50 of different sizes, during the continuous process of heating batteries 50 of different models and sizes, when changing the model of the battery 50 to be processed, the battery 50 support mechanism already fixed in the battery 50 heating device needs to be disassembled and replaced with a battery 50 support mechanism adapted to the model of the battery 50 to be processed next. On one hand, replacing the battery 50 support mechanism takes a long time, causing a prolonged pause in the heating process of the batteries 50, affecting the processing efficiency of the batteries 50. On the other hand, to adapt to batteries 50 of different models and sizes, multiple different battery 50 support mechanisms need to be manufactured and stored, resulting in high production and storage costs for the battery 50 support mechanisms.

Based on the above considerations, to address the issue of poor compatibility of the battery support mechanism for batteries of different sizes, the embodiments of the present application provide a battery support mechanism and a battery heating device. A distance between two end plate support structures in the battery support mechanism can be adjusted to adapt to batteries of different sizes, thereby improving the compatibility of the battery support mechanism. The battery heating device includes the above battery support mechanism, so when heating batteries of different sizes, only the distance between the two end plate support structures needs to be adjusted, without replacing the entire battery support mechanism. The battery model change process time is shorter, the efficiency is higher, and there is no need to produce and store multiple types of battery support mechanisms, thereby reducing storage costs.

The battery support mechanism provided by the embodiments can not only be applied to a battery heating device but also to other devices for processing batteries to support the battery and provide positional limitation for the battery in the length direction.

For ease of description, the following description takes the application of the battery support mechanism in a battery heating device as an example for further description.

In the embodiments, the length direction of the battery is defined as the direction X, the width direction of the battery is defined as the direction Y, and the height direction of the battery is defined as the direction Z.

As shown in FIG. 2, the battery heating device 1 provided by the embodiments includes a frame 10, a battery support mechanism 30, a heating mechanism 20, and a pole pressing mechanism 40. The battery support mechanism 30, the heating mechanism 20, and the pole pressing mechanism 40 are all mounted on the frame 10. The frame 10 provides installation space for the battery support mechanism 30, the heating mechanism 20, and the pole pressing mechanism 40. Along the direction Y, the heating mechanism 20 and the pole pressing mechanism 40 are respectively provided on two sides of the battery support mechanism 30. The heating mechanisms 20 located on two sides of the battery support mechanism 30 can move along the direction Y relative to the frame 10, so to approach or move away from each other, enabling the heating mechanism 20 to contact the side plates 52 of the battery 50 to heat the side plates 52 of the battery 50. The heating mechanism 20 can also apply pressure to the side plates 52 of the battery 50. The pole pressing mechanism 40 can move along the direction Y relative to the frame 10 and can move along the direction Z relative to the frame 10. Optionally, the pole pressing mechanism 40 may be mounted on the heating mechanism 20, and the pole pressing mechanism 40 can move along the direction Z relative to the heating mechanism 20. In the direction Y, the pole pressing mechanism 40 moves synchronously with the heating mechanism 20. The pole pressing mechanism 40 is configured to press against the poles of the battery 50.

As shown in FIG. 2, the heating mechanism 20 includes a heating element and a heat-conducting element, the heat-conducting element is in contact with the heating element, and the heat from the heating element can be transferred to the battery 50 through the heat-conducting element. The heat-conducting element can be in contact with the battery 50. The heat-conducting element is provided with an avoidance hole 21, and the avoidance hole 21 is used to avoid a protruding structure on the side plate 52 of the battery 50. Multiple avoidance holes 21 may be provided on the heat-conducting element, and the shapes and sizes of different avoidance holes 21 may be the same or different. The position, number, shape, and size of the avoidance holes 21 on the heat-conducting element can be set according to the side plates 52 of various batteries 50 to be heated, to improve the compatibility of the heating mechanism 20.

In a feasible embodiment, the heat-conducting element includes a heat-conducting plate and a gasket that are in contact with each other, with the heat-conducting plate located between the heating element and the gasket. The gasket is made of a heat-conductive soft material. Multiple avoidance holes are provided, and the multiple avoidance holes include at least one avoidance through hole and at least one avoidance blind hole. In the direction Y, the avoidance through hole penetrates the gasket and at least part of the heat-conducting plate, and the avoidance blind hole is provided on the gasket. Through the arrangement of the avoidance through hole and avoidance blind hole, protruding structures of different sizes in the direction Y on the side plates 52 can be avoided.

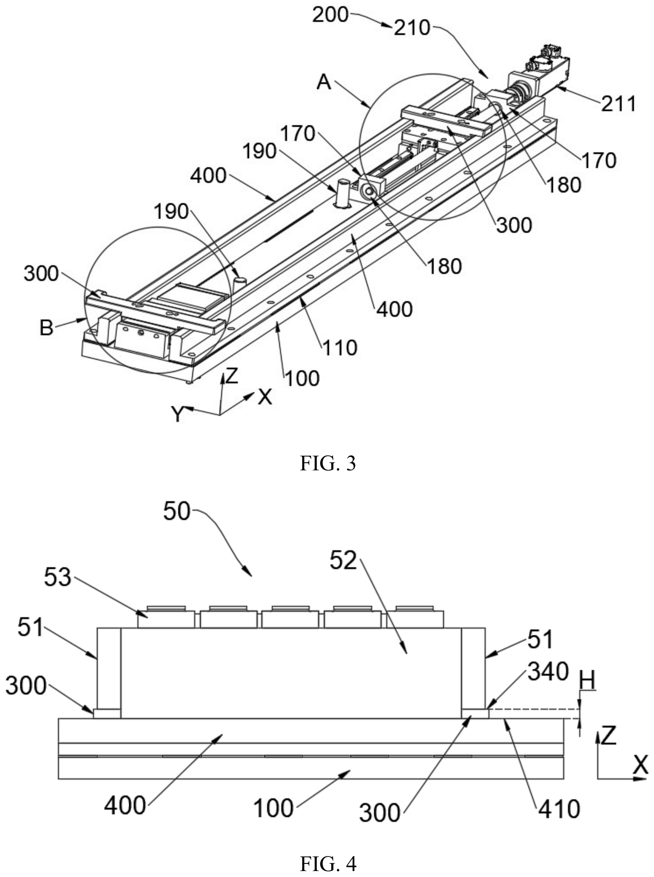

As shown in FIG. 3, the battery support mechanism 30 includes: a base 100, a drive structure 200, and two end plate support structures 300, where the two end plate support structures 300 are spaced apart along a first direction on the base 100, and at least one of the two end plate support structures 300 is in transmission connection to the drive structure 200 to move along the first direction under the drive of the drive structure 200.

The first direction is a direction set at a certain angle to the width direction of the battery 50, and the first direction is relatively perpendicular to the height direction of the battery 50. With this arrangement, when the battery 50 is located between the two end plate support structures 300, and the two end plate support structures 300 move along the first direction, the two end plate support structures 300 can approach or move away from the battery 50 in the direction X, while their positions in the direction Z remain unchanged. For example, the first direction may be the length direction of the battery 50, that is, the first direction is the direction X. During the movement of the two end plate support structures 300 along the first direction, the two end plate support structures 300 approach or move away from the battery 50 in the direction X.

The base 100 is configured to mount the end plate support structures 300, and the end plate support structures 300 can move along the direction X relative to the base 100. The base 100 may be a plate-like structure, a frame structure, or other forms of structure. The base 100 is configured to connect to the frame 10, and the connection between the base 100 and the frame 10 may be a fixed connection or a detachable connection. The fixed connection may use methods such as bonding or welding, and the detachable connection may use methods such as screwing or snapping.

The drive structure 200 is configured to provide power for at least one end plate support structure 300 to move along the direction X. That is, the drive structure 200 may be in transmission connection to one of the end plate support structures 300, driving the end plate support structure 300 to move along the direction X, so to make the end plate support structure 300 approach or move away from the other end plate support structure 300, thereby changing the distance between the two end plate support structures 300. Alternatively, the drive structure 200 may be in transmission connection to both end plate support structures 300, and may drive only one of the end plate support structures 300 to move along the direction X, so to make the end plate support structure 300 approach or move away from the other end plate support structure 300, or may drive both end plate support structures 300 to move along the direction X to change the distance between the two end plate support structures 300.

The end plate support structure 300 is configured to support the end plate 51 of the battery 50. The end plate support structure 300 may be in various structural forms such as block, mesh, or frame. One end plate support structure 300 may be an integral structure or formed by connecting multiple parts. The shape and size of the end plate support structure 300 may be set according to the shape and size of the bottom surface of the end plate 51 of the battery 50 to be supported. The shapes of the two end plate support structures 300 may be the same or different. The sizes of the two end plate support structures 300 may be the same or different.

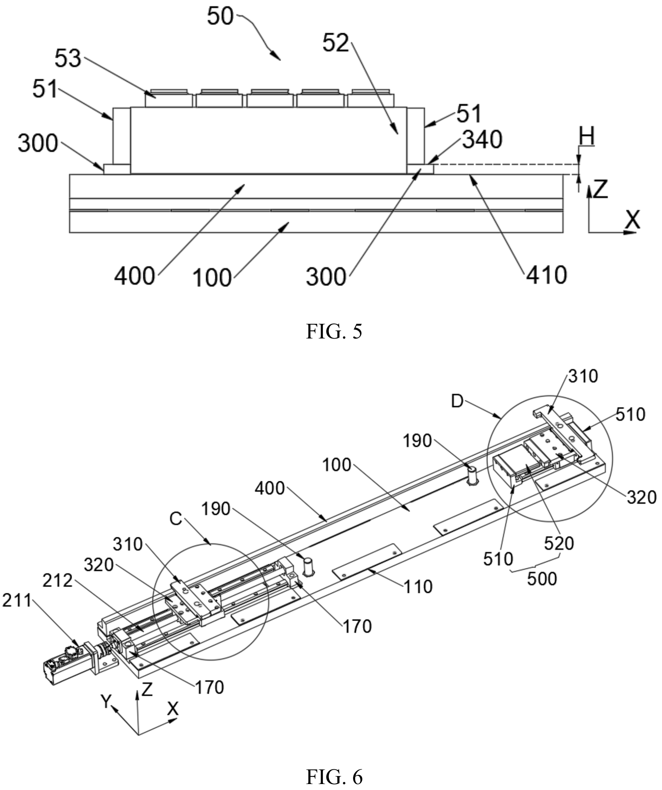

As shown in FIGs. 3 and 4, the end plate support structures 300 are configured to support the bottoms of the end plates 51 of the battery 50, with the two end plate support structures 300 respectively supporting the bottoms of the end plates 51 on two sides of the battery 50. Since the drive structure 200 can drive at least one of the two end plate support structures 300 to move, the distance between the two end plate support structures 300 can be changed. With this arrangement, when heating batteries 50 of different sizes, the distance between the two end plate support structures 300 can be changed by the drive structure 200, enabling the two end plate support structures 300 to support the bottoms of the end plates 51 of batteries 50 of different sizes, thereby improving the compatibility of the battery support mechanism 30. That is, through the battery support mechanism 30, support can be provided for batteries 50 of various sizes, and during the continuous process of heating batteries 50 of different sizes, there is no need to replace the entire heating device or the entire battery support mechanism 30, improving the processing efficiency for batteries 50 of different sizes. As shown in FIGs. 4 and 5, the end plate support structures 300 support two batteries 50 of different lengths. In FIG. 4, the battery 50 is longer, and the distance between the two end plate support structures 300 is larger, with the two end plate support structures 300 respectively located below the two end plates 51 of the battery 50, thereby supporting the two end plates 51. In FIG. 5, the battery 50 is shorter, and during the battery model change process, the drive structure 200 causes at least one of the two end plate support structures 300 to move relative to the base 100, shortening the distance between the two end plate support structures 300. This enables the two end plate support structures 300 to support the end plates 51 on two sides of the shorter battery 50, adapting to the battery 50 after the model change. It should be noted that battery model change means that the battery 50 in the subsequent processing is a battery 50 of another model. For example, original batteries 50 in processing are larger-sized batteries 50 of a model, after this batch of batteries 50 has been processed, batteries 50 to be processed subsequently are smaller-sized batteries 50 of a model. The process of adjusting the device from a state of being adapted to batteries 50 of a model to a state of being adapted to batteries 50 to be processed subsequently is battery model change.

As shown in FIGs. 5 to 8, in some embodiments, the battery support mechanism 30 further includes a bottom surface support structure 400, and the bottom surface support structure 400 is mounted on the base 100. As shown in FIG. 5, each end plate support structure 300 has a first support surface 340 on a side facing away from the base 100, the bottom surface support structure 400 has a second support surface 410 on a side facing away from the base 100, and a distance between the first support surface 340 and the base 100 is greater than a distance between the second support surface 410 and the base 100. It should be noted that the distance between the first support surface 340 and the base 100, and the distance between the second support surface 410 and the base 100 are both distances in the direction Z. That is, there is a height difference H between the first support surface 340 and the second support surface 410. In other words, in the direction Z, there is a spacing between the first support surface 340 and the second support surface 410, and the spacing is the height difference H.

The bottom surface support structure 400 is configured to support the battery bottom surface of the battery 50. The bottom surface support structure 400 is mounted on the base 100. The connection between the bottom surface support structure 400 and the base 100 may be a fixed connection or a detachable connection, or the bottom surface support structure 400 and the base 100 may be an integral structure. One or more bottom surface support structures 400 may be provided. When multiple bottom surface support structures 400 are provided, the multiple bottom surface support structures 400 are spaced apart on the base 100. For example, in FIG. 3, two bottom surface support structures 400 are provided, and the two bottom surface support structures 400 are spaced apart along the direction Y, with the length direction of the bottom surface support structure 400 being the direction X to increase the support area for the bottom surface of the battery. In one arrangement, part of the structure of the end plate support structure 300 is located above the bottom surface support structure 400, and the projection of the end plate support structure 300 on the base 100 may partially cover the bottom surface support structure 400. The length of the bottom surface support structure 400 is greater than the maximum distance between the two end plate support structures 300. In this arrangement, when the battery 50 is placed on the battery support mechanism 30, both end plates 51 of the battery 50 are supported on the two end plate support structures 300, and at least a partial region of the bottom surface of the battery along the direction X is in contact with the bottom surface support structure 400. That is, the bottom surface support structure 400 can adapt to bottom plates of batteries 50 of various sizes.

In the technical solution of the embodiments of the present application, the bottom surface support structure 400 supports the bottom surface of the battery. Due to the height difference between the bottom surface of the battery and the bottom of the end plate 51 of the battery 50, and the height difference H between the first support surface 340 of the end plate support structure 300 and the second support surface 410 of the bottom surface support structure 400, when the end plate support structure 300 supports the end plate 51 of the battery 50, the bottom surface support structure 400 can support the bottom surface of the battery. That is, the battery support mechanism 30 provides a larger support range and better support effect for the battery 50.

In some embodiments, the bottom surface support structure 400 is detachably connected to the base 100. Since the bottom surface support structure 400 is detachably connected to the base 100, the height difference between the first support surface 340 and the second support surface 410 can be adjusted by using bottom surface support structures 400 of different heights, thereby adapting to batteries 50 of different sizes. In different models of batteries 50, there may be different height differences between the end plates 51 and the bottom plates of the batteries 50. With this arrangement, bottom surface support structures 400 of different heights can be used to adapt to different batteries 50 with different height differences. For example, when the height difference between the end plate 51 and the battery bottom surface of the battery 50 is small, a bottom surface support structure 400 with a higher height is used. When the height difference between the end plate 51 and the battery bottom surface of the battery 50 is large, a bottom surface support structure 400 with a smaller height is used.

In an optional embodiment, the bottom surface support structure 400 includes a cross plate and a longitudinal plate, the longitudinal plate is provided on the cross plate, and the cross plate is provided with a mounting region. That is, the cross plate is directly in contact with and connected to the base 100, and the longitudinal plate is configured to contact the bottom surface of the battery to support the battery 50. The longitudinal plate and the cross plate may be an integral structure manufactured through an integral molding process. The disposition of the cross plate, on one hand, facilitates the layout of the mounting region, and on the other hand, increases the contact area between the bottom surface support structure 400 and the base 100, improving connection stability and enhancing the support stability of the bottom surface support structure 400 for the battery 50. The longitudinal plate and the cross plate may be connected to form a T-shaped structure, an L-shaped structure, or the like.

In a specific embodiment, the mounting region is provided with a through hole, the through hole runs through the cross plate along the direction Z, and the through hole is used for a locking member to pass through to connect the cross plate to the base 100. The locking member may be a bolt, a locking pin, a spline, or the like.

As shown in FIG. 6, in some embodiments, the battery support mechanism 30 further includes a first spacer 110, the first spacer 110 is located between the bottom surface support structure 400 and the base 100, and the first spacer 110 and the bottom surface support structure 400 are both detachably connected to the base 100.

The first spacer 110 is configured to change the distance between the second support surface 410 on the bottom surface support structure 400 and the base 100, thereby changing the height difference H between the first support surface 340 and the second support surface 410. The first spacer 110 is a sheet-like rigid structure, such as a metal sheet. In the direction Z, one or more first spacers 110 may be provided between the bottom surface support structure 400 and the base 100, or no first spacer 110 may be provided. That is, during the battery model change process, the height of the bottom surface support structure 400 can be adjusted by adding or reducing the first spacer 110, thereby changing the height difference between the first support surface 340 and the second support surface 410 to adapt to different models of batteries 50.

In an optional arrangement, the first spacer 110 may be provided with a through hole. The locking member for mounting the bottom surface support structure 400 passes through the through hole on the bottom surface support structure 400, then through the through hole on the first spacer 110, and is locked on the base 100, thereby connecting the bottom surface support structure 400, the first spacer 110, and the base 100. During disassembly, the locking member is removed to take out the first spacer 110 from between the base 100 and the bottom surface support structure 400, or to add more first spacers 110.

In the first direction, one or more first spacers 110 may be provided between one bottom surface support structure 400 and the base 100. When multiple first spacers 110 are provided, the multiple first spacers 110 are spaced apart along the first direction on the base 100. When the bottom surface support structure 400 has a large size in the first direction, multiple first spacers 110 spaced apart can support different regions of the bottom surface support structure 400, improving the support stability of the first spacers 110 for a larger bottom surface support structure 400. By providing the first spacers 110 in multiple different regions of the bottom surface support structure 400 in the first direction, the multiple first spacers 110 can raise the entire bottom surface support structure 400 by a certain distance. As compared with having the first spacer 110 in contact with the entire bottom surface of the bottom surface support structure 400, this arrangement can achieve almost the same support effect but requires relatively less material to produce the first spacer 110, saving costs.

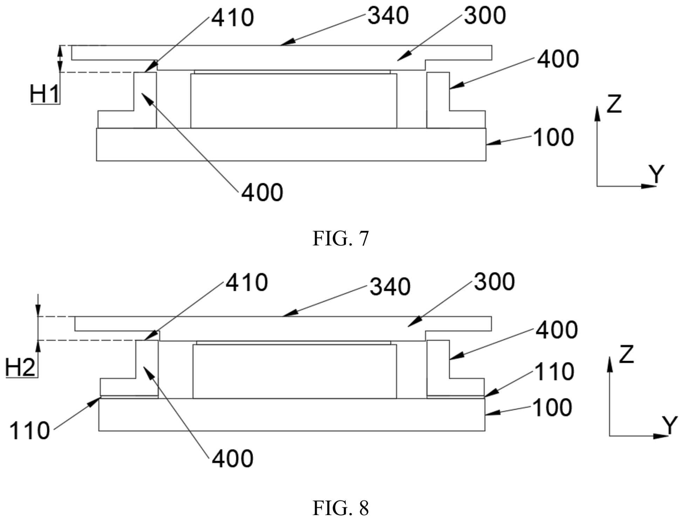

As shown in FIG. 7, when no first spacer 110 is provided between the bottom surface support structure 400 and the base 100, the height difference between the first support surface 340 and the second support surface 410 is H1. As shown in FIG. 8, in the direction Z, when one first spacer 110 is added between the bottom surface support structure 400 and the base 100, the height difference between the first support surface 340 and the second support surface 410 is H2, where H2 is less than H1, and H2 is reduced by approximately the height of one first spacer 110 as compared with H1. If more first spacers 110 are added between the bottom surface support structure 400 and the base 100 in the direction Z, the distance between the first support surface 340 and the second support surface 410 will be further reduced. When the first spacer 110 is provided, within the adjustable range of the first spacer 110, there is no need to replace the bottom surface support structure 400, thereby saving the manufacturing cost of the battery support mechanism 30.

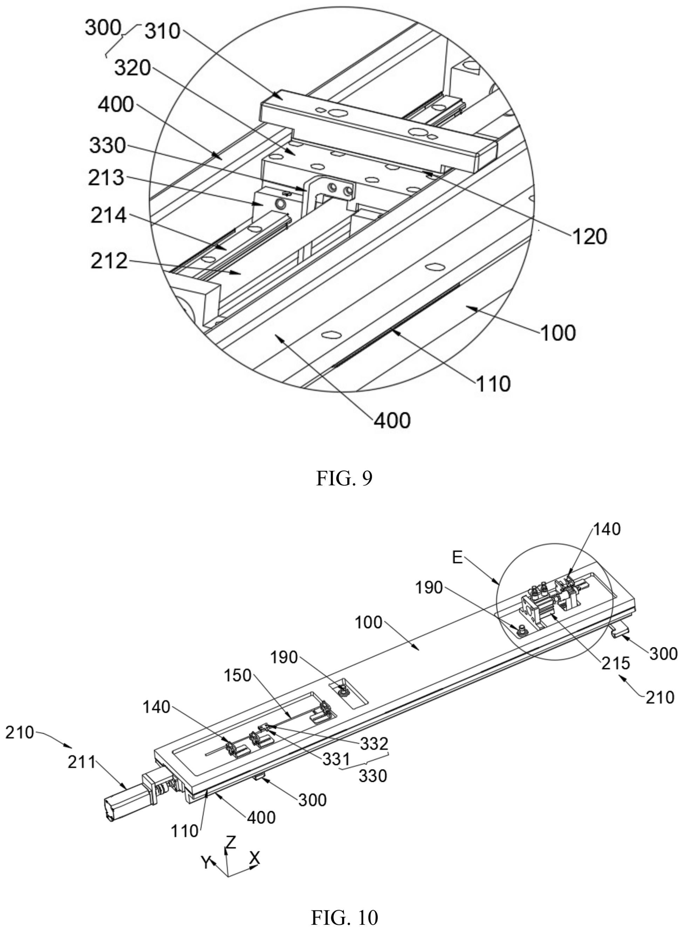

As shown in FIG. 9, in some embodiments, the end plate support structure 300 includes a support member 310 and a first adapter 320, and the support member 310 is detachably mounted on a side of the first adapter 320 farther away from the base 100.

In the two end plate support structures 300, if one is in transmission connection to the drive structure 200, and the other is fixedly connected to the base 100, in the end plate support structure 300 in transmission connection to the drive structure 200, the first adapter 320 is slidably assembled on the base 100, the support member 310 is detachably mounted on the first adapter 320, and the drive structure 200 is in transmission connection to at least one of the first adapter 320 and the support member 310 to drive the first adapter 320 and the support member 310 to move synchronously. In the end plate support structure 300 fixedly connected to the base 100, the first adapter 320 is fixedly mounted on the base 100, and the support member 310 is detachably mounted on the first adapter 320. If both end plate support structures 300 are in transmission connection to the drive structure 200, in both end plate support structures 300, the first adapter 320 is slidably assembled on the base 100, the support member 310 is detachably mounted on the first adapter 320, and the drive structure 200 is in transmission connection to at least one of the first adapter 320 and the support member 310 in the same end plate support structure 300 to drive the first adapter 320 and the support member 310 in the same end plate support structure 300 to move synchronously. It can be learned from the above that in the end plate support structure 300, the first adapter 320 is configured to be mounted on the base 100, and the support member 310 is configured to be in contact with the end plate 51 of the battery 50 to support the end plate 51. Since the support member 310 is detachably mounted on the first adapter 320, the height difference between the first support surface 340 and the second support surface 410 can be adjusted by using support members 310 of different heights, thereby adapting to batteries 50 of different sizes. A higher height of the support member 310 means a greater height difference between the first support surface 340 and the second support surface 410.

Still referring to FIG. 9, in some embodiments, the battery support mechanism 30 further includes a second spacer 120, the second spacer 120 is located between the support member 310 and the first adapter 320, and the second spacer 120, the support member 310, and the first adapter 320 are detachably connected.

The second spacer 120 is configured to change the distance between the first support surface 340 and the base 100, so as to change the height difference between the first support surface 340 and the second support surface 410. The second spacer 120 is a sheet-like rigid structure, such as a metal sheet. In the direction Z, one or more second spacers 120 may be provided between the support member 310 and the first adapter 320, or no second spacer 120 may be provided. That is, during the battery model change process, the height of the end plate support structure 300 can be adjusted by adding or reducing the second spacer 120, so as to change the height difference H between the first support surface 340 and the second support surface 410 to adapt to different models of batteries 50. When the second spacer 120 is provided, within the adjustable range of the second spacer 120, there is no need to replace the support member 310, thereby saving the manufacturing cost of the battery support mechanism 30.

Either the first spacer 110 or the second spacer 120 may be provided alone, or both may be provided. That is, the distance between the second support surface 410 and the base 100 can be changed by only increasing or decreasing the number of first spacers 110 in the direction Z, thereby changing the distance between the second support surface 410 and the first support surface 340. Alternatively, the distance between the first support surface 340 and the base 100 can be changed by only increasing or decreasing the number of second spacers 120 in the direction Z, thereby changing the distance between the second support surface 410 and the first support surface 340. Alternatively, the distance between the second support surface 410 and the first support surface 340 can be changed by respectively increasing or decreasing the number of first spacers 110 and second spacers 120 in the direction Z. When the number of first spacers 110 decreases and the number of second spacers 120 increases, the distance between the first support surface 340 and the second support surface 410 increases more. When the number of first spacers 110 increases and the number of second spacers 120 decreases, the distance between the first support surface 340 and the second support surface 410 decreases more. Providing both the first spacer 110 and the second spacer 120 allows for a larger adjustable range for the distance between the first support surface 340 and the second support surface 410.

In some embodiments, as shown in FIG. 10, the battery support mechanism 30 further includes a position sensor 140, and the position sensor 140 is configured to detect the position of the end plate support structure 300 in the first direction. The position of the end plate support structure 300 can be detected by the position sensor 140, facilitating determination of whether the end plate support structure 300 has moved to the correct position. For example, a position in the direction X may be used as the initial position of the end plate support structure 300, and after the end plate support structure 300 moves, the movement distance of the end plate support structure 300 is detected to obtain the position of the end plate support structure 300 in the direction X. Alternatively, the position sensor 140 may directly detect the distance between the two end plate support structures 300 to determine whether the positions of the two end plate support structures 300 meet the requirements. For example, an infrared distance sensor may be used to detect the distance between the two end plate support structures 300. Alternatively, multiple trigger positions may be set along the direction X, and the movable end plate support structure 300 can trigger the position sensor 140 at the trigger position, and the movement position of the end plate support structure 300 in the first direction is determined by the triggered position sensor 140.

In some embodiments, the position sensor 140 is electrically connected to the drive structure 200. The position information detected by the position sensor 140 is transmitted to the drive structure 200, and the drive structure 200 controls the movement or stopping of the end plate support structure 300 based on the position information of the end plate support structure 300, achieving a high level of intelligence. The position sensor 140 may be directly electrically connected to the drive structure 200 to send position information directly to the drive structure 200, and the drive structure 200 performs, based on the received position information, the operation of controlling the movement or stopping of the end plate support structure 300. For example, if the drive structure 200 needs to control the end plate support structure 300 to move to position X1 so that the distance between the two end plate support structures 300 is L1, if the position information fed back by the position sensor 140 indicates that the end plate support structure 300 has moved to position X1, or indicates that the distance between the two end plate support structures 300 is L1, the drive structure 200 stops driving the end plate support structure 300 to move, so that the two end plate support structures 300 remain at positions with a distance of L1 therebetween.

In some embodiments, multiple position sensors 140 are provided, the multiple position sensors 140 are spaced apart along the first direction on the base 100, a trigger member 330 is provided on the end plate support structure 300 in transmission connection to the drive structure 200, and the trigger member 330 is capable of triggering any one of the position sensors 140. The position sensor 140 may be a photoelectric sensor, such as a slot-type photoelectric sensor. For example, as shown in FIG. 10, within the movement range of the end plate support structure 300 that can move relative to the base 100, three position sensors 140 are spaced apart along the direction X. These three position sensors 140 can at least identify three different models of batteries 50. When supporting the first model of battery 50, the movable end plate support structure 300 is at position one. When the end plate support structure 300 is at position one, the trigger member 330 causes one of the position sensors 140 to be in a triggered state, while the other two position sensors 140 are in a non-triggered state. When supporting the second model of battery 50, the movable end plate support structure 300 is at position two. When the end plate support structure 300 is at position two, the trigger member 330 causes another position sensor 140 to be in a triggered state, while the other two position sensors 140 are in a non-triggered state. When supporting the third model of battery 50, the movable end plate support structure 300 is at position three. When the end plate support structure 300 is at position three, the trigger member 330 causes the third position sensor 140 to be in a triggered state, while the remaining two position sensors 140 are in a non-triggered state. When the battery 50 changes from the first model to the second model, the drive structure 200 drives the end plate support structure 300 to move from position one to position two. When the movement is not yet complete, the position sensor 140 corresponding to position two is in a non-triggered state. When the trigger member 330 causes the position sensor 140 corresponding to position two to be triggered, the drive structure 200 stops driving the end plate support structure 300, so that the end plate support structure 300 stays at position two. In this design, the movement position of the end plate support structure 300 can be determined based on the position of the triggered position sensor 140, so a slot-type photoelectric sensor can be used as the position sensor 140. The position sensor 140 has a relatively low cost.

In some embodiments, the position sensor 140 may be mounted on a same side of the base 100 as the end plate support structure 300, and the top surface height of the position sensor 140 may be lower than the height of the second support surface 410, that is, when the battery support mechanism 30 is used to support the battery 50, the position sensor 140 is located below the battery 50.

Alternatively, in some other embodiments, as shown in FIG. 10, the position sensor 140 is mounted on a side of the base 100 facing away from the end plate support structure 300, the base 100 is provided with a first through hole 150, the trigger member 330 passes through the first through hole 150, one end of the trigger member 330 is connected to the end plate support structure 300, the other end is a trigger end, the trigger end and the position sensor 140 are located on a same side of the base 100, and the trigger member 330 is capable of moving along the first direction relative to the first through hole 150.

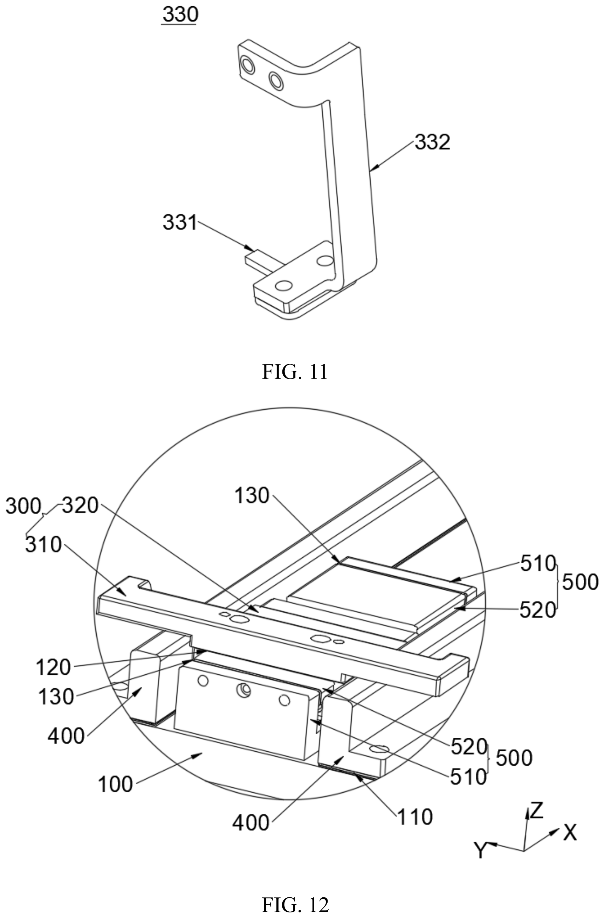

The trigger member 330 is configured to switch the position sensor 140 from a non-triggered state to a triggered state. When the position sensor 140 is a slot-type photoelectric sensor, the position sensor 140 has a slot, with the two sides of the slot being a transmitting end and a receiving end, respectively. When the trigger member 330 moves into the slot, the light emitted from the transmitting end to the receiving end is blocked. When the receiving end has not received the light, the position sensor 140 switches to the triggered state. As shown in FIG. 11, in an optional embodiment, the trigger member 330 includes a main body portion 332 and a trigger portion 331. One end of the main body portion 332 is connected to the end plate support structure 300, the other end passes through the first through hole 150 along the direction Z and is connected to the trigger portion 331, and the trigger portion 331 can extend into the slot of the position sensor 140 to trigger the position sensor 140. The structural shape of the main body portion 332 needs to be set according to the relative positions of the end plate support structure 300 and the trigger portion 331.

The position sensor 140 and the end plate support structure 300 are respectively located on two opposite sides of the base 100. This, on one hand, eliminates the need to avoid the bottom structure of the battery 50, facilitating layout design, and on the other hand, provides a larger installation space on the other side of the base 100, facilitating the installation or maintenance of the position sensor 140.

As shown in FIG. 12, in some embodiments, the battery support mechanism 30 further includes a limiting structure 500, and in the first direction, the limiting structure 500 is mounted on at least one side of the end plate support structure 300 in transmission connection to the drive structure 200. In the technical solution of the embodiments of the present application, disposition of the limiting structure 500 can limit the maximum movement distance of the end plate support structure 300 in at least one direction to some extent.

For example, a limiting structure 500 may be provided on a side that is of the end plate support structure 300 in transmission connection to the drive structure 200 and that is close to the other end plate support structure 300, while no limiting structure 500 is provided on the other side of the end plate support structure 300. In this arrangement, the limiting structure 500 can limit the maximum movement distance of the end plate support structure 300 in the direction approaching the other end plate support structure 300. That is, it is configured to limit the shortest distance between the two end plate support structures 300. Alternatively, a limiting structure 500 may be provided on a side that is of the end plate support structure 300 in transmission connection to the drive structure 200 and that is away from the other end plate support structure 300, while no limiting structure 500 is provided on the other side of the end plate support structure 300. In this arrangement, the limiting structure 500 can limit the maximum movement distance of the end plate support structure 300 in the direction moving away from the other end plate support structure 300. That is, it is configured to limit the longest distance between the two end plate support structures 300.

Alternatively, in some embodiments, as shown in FIG. 12, two limiting structures 500 are provided, and in the first direction. The limiting structures 500 are respectively provided on two sides of the end plate support structure 300 in transmission connection to the drive structure 200. The two limiting structures 500 can limit the movement range of the end plate support structure 300 located between them in the first direction. Alternatively, the position of the end plate support structure 300 can also be limited by the limiting structure 500. That is, when the end plate support structure 300 is in contact with the limiting structure 500 on one side, it is at position three. When the end plate support structure 300 is at position three, the battery support mechanism 30 can be configured to support a certain model of battery 50. When the end plate support structure 300 moves to come into contact with the limiting structure 500 on the other side, it is at position four. When the end plate support structure 300 is at position four, the battery support mechanism 30 can be configured to support another model of battery 50.

The limiting structure 500 may be an integrally formed structure or a structure formed by connecting multiple structural members. When two limiting structures 500 are provided, the two limiting structures 500 may be of the same structure or different structures.

In some embodiments, as shown in FIG. 12, the limiting structure 500 includes a first structural member 510 and a second structural member 520, the first structural member 510 is mounted on the base 100, the second structural member 520 is located between the first structural member 510 and the end plate support structure 300, and the second structural member 520 is detachably connected to the first structural member 510.

In the direction X, the second structural member 520 is mounted on a side of the first structural member 510 close to the end plate support structure 300, and the end plate support structure 300 can come into contact with the second structural member 520. Since the first structural member 510 and the second structural member 520 are detachably connected, different second structural members 520 can be used. Different second structural members 520 have different sizes in the direction X. Therefore, when coming into contact with second structural members 520 of different sizes, the end plate support structure 300 is at different positions. That is, the maximum movement distance of the end plate support structure 300 in the direction approaching the limiting structure 500 can be changed by using second structural members 520 of different sizes.

For example, with the limiting structure 500 located on the side of the end plate support structure 300 farther away from the other end plate support structure 300, if the position of the other end plate support structure 300 remains unchanged, when the end plate support structure 300 adjacent to the limiting structure 500 is in contact with the second structural member 520, the distance between the two end plate support structures 300 is L2. When the second structural member 520 is replaced with a second structural member 520 with a larger size in the direction X, when the end plate support structure 300 adjacent to the limiting structure 500 is in contact with the second structural member 520, the distance between the two end plate support structures 300 is L3, where L3 is less than L2. When the second structural member 520 is replaced with a second structural member 520 with a smaller size in the direction X, when the end plate support structure 300 adjacent to the limiting structure 500 is in contact with the second structural member 520, the distance between the two end plate support structures 300 is L4, where L4 is greater than L2.

In some embodiments, as shown in FIG. 12, the battery support mechanism 30 further includes a third spacer 130, the third spacer 130 is located between the first structural member 510 and the second structural member 520, and the third spacer 130 and the first structural member 510 are both detachably connected to the second structural member 520. Both the third spacer 130 and the first structural member 510 may be connected to the second structural member 520 by a bolt. In the direction X, one third spacer 130 may be installed between the first structural member 510 and the second structural member 520, multiple third spacers 130 may be installed, or no third spacer 130 may be installed. In the direction X, more third spacers 130 between the first structural member 510 and the second structural member 520 means a smaller movable range of the adjacent end plate support structure 300.

In this arrangement, within the adjustable range of the third spacer 130, there is no need to use second structural members 520 of other sizes, and the maximum movement distance of the end plate support structure 300 in the direction approaching the limiting structure 500 can be changed by simply adding or reducing the third spacer 130.

When limiting structures 500 are respectively provided on two sides of the same end plate support structure 300, one limiting structure 500 may be an integral structure, and the other limiting structure 500 may include a first structural member 510 and a second structural member 520 that are detachably connected. Alternatively, both the limiting structures 500 may include a first structural member 510 and a second structural member 520 that are detachably connected.

The first spacer 110, the second spacer 120, and the third spacer 130 may be made of the same material, such as a metal material.

In some embodiments, the drive structure 200 includes one drive assembly 210, and the drive assembly 210 is in transmission connection to one of the end plate support structures 300 to drive the end plate support structure 300 to move along the first direction, so to approach or move away from the other end plate support structure 300.

In the technical solution of the embodiments of the present application, after changing the model of the battery 50 to be supported, the drive assembly 210 drives one of the end plate support structures 300 to move toward or away from the other end plate support structure 300, thereby changing the distance between the two end plate support structures 300. In this movement mode, only one drive assembly 210 needs to be activated, making the adjustment process simple.

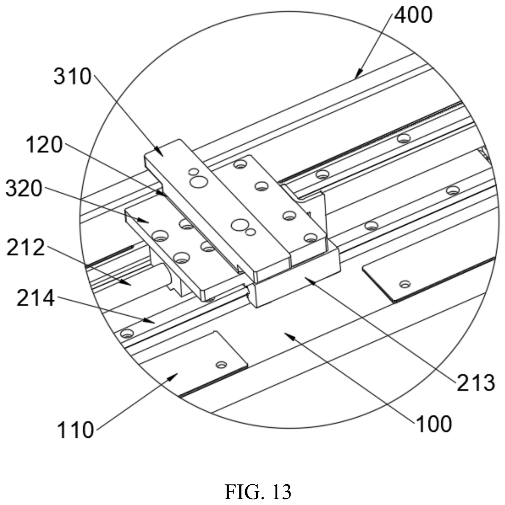

The drive assembly 210 includes a driver, and the driver drives the end plate support structure 300 to move through a transmission structure. The driver may be an electric driver, a hydraulic driver, or a pneumatic driver. For example, it may include a motor, a hydraulic cylinder, a pneumatic cylinder, or other devices for providing power. The transmission structure is configured to transmit power, and the drive assembly 210 may also include a transmission structure. For example, when the driver includes a motor, the transmission structure may include a lead screw 212 and a slider, and the lead screw 212 is in transmission connection to the slider, to convert the rotational driving force of the motor into a linear driving force along the direction X through the cooperation of the lead screw 212 and the slider. For example, as shown in FIG. 5, the drive assembly 210 includes a servo motor 211 and a lead screw 212, and the axial direction of the lead screw 212 is parallel to the direction X. The output shaft of the servo motor 211 is in transmission connection to the lead screw 212, for example, through a coupling. As shown in FIG. 10, a threaded hole is provided on the first slider 213, and the lead screw 212 is threadedly engaged with the first slider 213. When the output shaft of the servo motor 211 rotates, the output shaft drives the lead screw 212 to rotate, and the lead screw 212 drives the first slider 213 to move along the direction X, thereby driving the end plate support structure 300 mounted on the first slider 213 to move in the direction X. As shown in FIG. 5, a bearing 180 may be sleeved on the lead screw 212, the bearing 180 is mounted on a bearing seat 170, and the bearing seat 170 is mounted on the base 100. Two bearings 180 may be spaced apart on the lead screw 212, and the first slider 213 moves in the region between the two bearings 180. Alternatively, as shown in FIGs. 11 and 13, the drive assembly 210 includes a hydraulic cylinder or a pneumatic cylinder, the hydraulic cylinder or pneumatic cylinder includes a cylinder body 215 and a cylinder rod, and the cylinder rod is in transmission connection to the end plate support structure 300 to drive the end plate support structure 300 to move along the direction X.

In some embodiments, the drive structure 200 includes two drive assemblies 210, the two drive assemblies 210 are in one-to-one transmission connection to the two end plate support structures 300, and each drive assembly 210 is capable of driving the corresponding end plate support structure 300 to move along the first direction, so to approach or move away from the other end plate support structure 300.

The two drive assemblies 210 may be of the same structure or different structures. For example, both drive assemblies 210 may include a servo motor 211 and a lead screw 212; or both drive assemblies 210 may include a hydraulic cylinder; or both drive assemblies 210 may include a pneumatic cylinder. Alternatively, one of the two drive assemblies 210 may include a servo motor 211 and a lead screw 212, and the other may include a hydraulic cylinder or a pneumatic cylinder. Alternatively, one of the two drive assemblies 210 includes a hydraulic cylinder, and the other includes a pneumatic cylinder.

In the above embodiments, since each of the two end plate support structures 300 is connected to the drive assembly 210, both end plate support structures 300 can move toward or away from each other, allowing batteries 50 of different sizes to be supported at a relatively more centered position in the battery support mechanism 30.

In a specific embodiment of this embodiment, as shown in FIGs. 2 and 3, the battery heating device 1 includes a battery support mechanism 30, and the battery support mechanism 30 includes a base 100, a drive structure 200, two end plate support structures 300, two bottom surface support structures 400, a position sensor 140, and a proximity sensor 190.

The two bottom surface support structures 400 are spaced apart along the direction Y on the base 100, the bottom surface support structure 400 is detachably connected to the base 100, and a first spacer 110 may be provided between the bottom surface support structure 400 and the base 100.

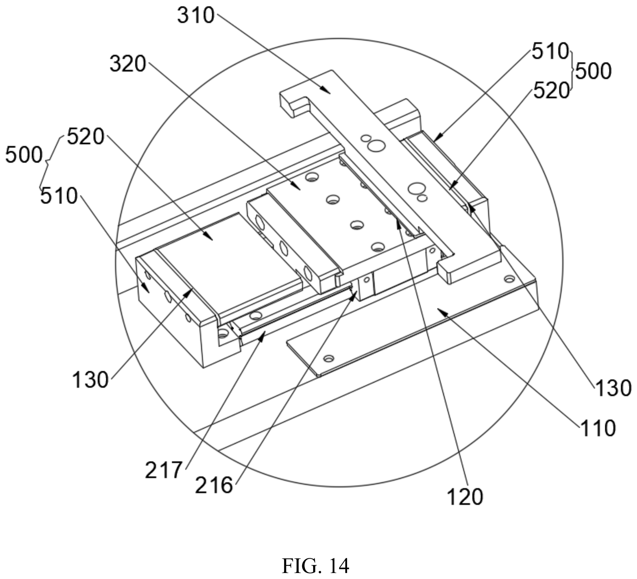

As shown in FIGs. 3 and 10, the drive structure 200 includes two drive assemblies 210, one drive assembly 210 is in transmission connection to one end plate support structure 300, and the other drive assembly 210 is in transmission connection to the other end plate support structure 300. As shown in FIG. 13, the base 100 is provided with a first slide rail 214, the first slide rail 214 is provided with a first slider 213, and one end plate support structure 300 is mounted on the first slider 213, thereby being slidably assembled on the base 100. As shown in FIG. 14, the base 100 is provided with a second slide rail 217, the second slide rail 217 is provided with a second slider 216, and the other end plate support structure 300 is mounted on the second slider 216, thereby being slidably assembled on the base 100. Both end plate support structures 300 include a support member 310 and a first adapter 320, the support member 310 and the first adapter 320 are detachably connected, and a second spacer 120 may be installed between the support member 310 and the first adapter 320.

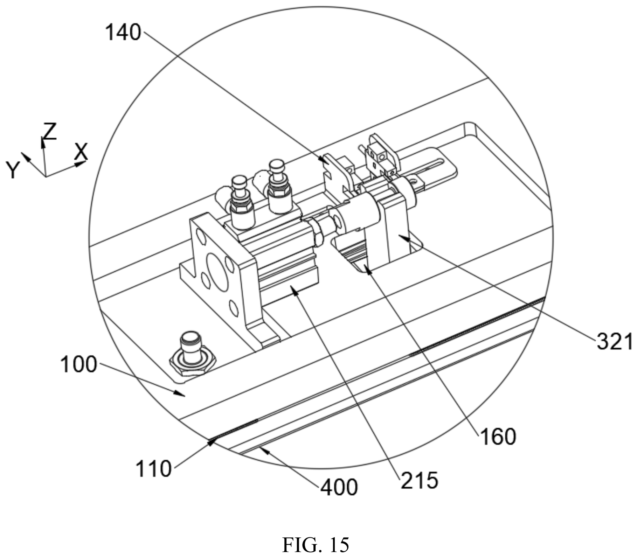

In the two drive assemblies 210, as shown in FIGs. 6, 9, and 13, one drive assembly 210 includes a servo motor 211 and a lead screw 212, the axial direction of the lead screw 212 is parallel to the direction X, and an output shaft of the servo motor 211 is in transmission connection to the lead screw 212, for example through a coupling. A threaded hole is provided on the first slider 213, and the lead screw 212 is threadedly engaged with the first slider 213. When the output shaft of the servo motor 211 rotates, the output shaft drives the lead screw 212 to rotate, and the lead screw 212 drives the first slider 213 to move along the direction X, thereby driving the end plate support structure 300 mounted on the first slider 213 to move in the direction X. A bearing 180 may be fitted on the lead screw 212, the bearing 180 is mounted on a bearing seat 170, and the bearing seat 170 is mounted on the base 100. Two bearings 180 may be spaced apart on the lead screw 212, and the first slider 213 moves in the region between the two bearings 180. As shown in FIG. 15, the other drive assembly 210 includes a hydraulic cylinder or a pneumatic cylinder, the hydraulic cylinder or pneumatic cylinder includes a cylinder body 215 and a cylinder rod, and the cylinder rod is in transmission connection to the end plate support structure 300 to drive the end plate support structure 300 to move along the direction X. This end plate support structure 300 also includes a second adapter 321, the base 100 is provided with a second through hole 160, the first adapter 320 is mounted on the second slider 216, one end of the second adapter 321 is connected to the first adapter 320, the other end passes through the second through hole 160 along the direction Z and is in transmission connection to the cylinder rod, and the second adapter 321 can move along the direction X within the second through hole 160. In this arrangement, the hydraulic cylinder or pneumatic cylinder can be provided on a side of the base 100 facing away from the battery 50, reducing the number of structures provided on a side of the base 100 facing towards the battery 50. The trigger member 330 on this end plate support structure 300 may be provided on the second adapter 321.

As shown in FIGs. 10 and 15, corresponding to the end plate support structure 300s, multiple position sensors 140 are respectively provided, each end plate support structure 300 is respectively provided with a trigger member 330, the trigger member 330 can trigger one of the multiple position sensors 140 to it, and the multiple position sensors 140 corresponding to one end plate support structure 300 are all electrically connected to the drive assembly in transmission connection to that end plate support structure 300.

In the direction X, as shown in FIG. 12, limiting structures 500 are provided on two sides of at least one end plate support structure 300, the limiting structure 500 includes a first structural member 510 and a second structural member 520 distributed along the direction X, the first structural member 510 is mounted on the base 100, the second structural member 520 is mounted on the first structural member 510, the first structural member 510 and the second structural member 520 are detachably connected, and a third spacer 130 may be provided between the first structural member 510 and the second structural member 520.

As shown in FIGs. 3 and 10, a proximity sensor 190 is provided on the base 100, and the proximity sensor 190 is configured to detect whether a battery is supported on the battery support mechanism 30. When the battery is in contact with the detection end of the proximity sensor 190, or the distance between the battery and the proximity sensor 190 is less than a threshold, the proximity sensor 190 is triggered.

Finally, it should be noted that the above embodiments are only used to illustrate the technical solution of the present application and not to limit it. Although the present application has been described in detail with reference to the foregoing embodiments, those of ordinary skill in the art should understand that modifications can still be made to the technical solutions described in the foregoing embodiments, or equivalent replacements can be made to some or all of the technical features thereof. These modifications or replacements do not make the essence of the corresponding technical solutions depart from the scope of the technical solutions of the embodiments of the present application, and they should all be included in the scope of the claims and specification of the present application. In particular, as long as there is no structural conflict, the technical features mentioned in each embodiment can be combined in any manner. The present application is not limited to the specific embodiments disclosed herein but includes all technical solutions falling within the scope of the claims.

## Claims

1. A battery support mechanism, **characterized by** comprising: a base, a drive structure, and two end plate support structures, wherein the two end plate support structures are spaced apart along a first direction on the base, and at least one of the two end plate support structures is in transmission connection to the drive structure to move along the first direction under the drive of the drive structure.

2. The battery support mechanism according to claim 1, **characterized in that** the battery support mechanism further comprises a bottom surface support structure, the bottom surface support structure is mounted on the base, each end plate support structure has a first support surface on a side farther away from the base, the bottom surface support structure has a second support surface on a side facing away from the base, and a distance between the first support surface and the base is greater than a distance between the second support surface and the base.

3. The battery support mechanism according to claim 2, **characterized in that** the bottom surface support structure is detachably connected to the base.

4. The battery support mechanism according to claim 3, **characterized in that** the battery support mechanism further comprises a first spacer, the first spacer is located between the bottom surface support structure and the base, and the first spacer and the bottom surface support structure are both detachably connected to the base.

5. The battery support mechanism according to claim 4, **characterized in that** multiple first spacers are provided, and the multiple first spacers are spaced apart along the first direction on the base.

6. The battery support mechanism according to any one of claims 1 to 5, **characterized in that** the end plate support structure comprises a support member and a first adapter, and the support member is detachably mounted on a side of the first adapter facing away from the base.

7. The battery support mechanism according to claim 6, **characterized in that** the battery support mechanism further comprises a second spacer, the second spacer is located between the support member and the first adapter, and the second spacer, the support member, and the first adapter are detachably connected.

8. The battery support mechanism according to any one of claims 1 to 7, **characterized in that** the battery support mechanism further comprises a position sensor, and the position sensor is configured to detect a position of the end plate support structure in the first direction.

9. The battery support mechanism according to claim 8, **characterized in that** the position sensor is electrically connected to the drive structure.

10. The battery support mechanism according to claim 8 or 9, **characterized in that** multiple position sensors are provided, the multiple position sensors are spaced apart along the first direction on the base, and a trigger member is provided on the end plate support structure in transmission connection to the drive structure, the trigger member being capable of triggering any one of the position sensors.

11. The battery support mechanism according to claim 10, **characterized in that** the position sensor is mounted on a side of the base facing away from the end plate support structure, the base is provided with a first through hole, the trigger member passes through the first through hole, one end of the trigger member is connected to the end plate support structure, the other end is a trigger end, the trigger end and the position sensor are located on a same side of the base, and the trigger member is capable of moving along the first direction relative to the first through hole.

12. The battery support mechanism according to any one of claims 1 to 11, **characterized in that** the battery support mechanism further comprises a limiting structure, and in the first direction, the limiting structure is mounted on at least one side of the end plate support structure in transmission connection to the drive structure.

13. The battery support mechanism according to claim 12, **characterized in that** two limiting structures are provided, and in the first direction, the limiting structures are respectively provided on two sides of the end plate support structure in transmission connection to the drive structure.

14. The battery support mechanism according to claim 12, **characterized in that** the limiting structure comprises a first structural member and a second structural member, the first structural member is mounted on the base, the second structural member is located between the first structural member and the end plate support structure, and the second structural member is detachably connected to the first structural member.

15. The battery support mechanism according to claim 14, **characterized in that** the battery support mechanism further comprises a third spacer, the third spacer is located between the first structural member and the second structural member, and the third spacer and the first structural member are both detachably connected to the second structural member.

16. The battery support mechanism according to any one of claims 1 to 15, **characterized in that** the drive structure comprises one drive assembly, and the drive assembly is in transmission connection to one of the end plate support structures to drive the end plate support structure to move along the first direction, so to approach or move away from the other end plate support structure.

17. The battery support mechanism according to any one of claims 1 to 15, **characterized in that** the drive structure comprises two drive assemblies, the two drive assemblies are in one-to-one transmission connection to the two end plate support structures, and each drive assembly is capable of driving the corresponding end plate support structure to move along the first direction, so to approach or move away from the other end plate support structure.

18. A battery heating device, **characterized in that** the battery heating device comprises the battery support mechanism according to any one of claims 1 to 17.
